(19) Europäisches Patentamt
European Patent Office
Office européen des brevets

(11) **EP 1 723 852 B1**

(12) **EUROPEAN PATENT SPECIFICATION**

(45) Date of publication and mention
of the grant of the patent:
**26.03.2008 Bulletin 2008/13**

(51) Int Cl.:
*A23G 9/46* (2006.01)    *A23G 9/32* (2006.01)
*A23D 7/00* (2006.01)

(21) Application number: **06075776.2**

(22) Date of filing: **31.03.2006**

(54) **Aerated edible emulsion**

Belüftete essbare Emulsion

Emulsion comestible aérée

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.04.2005 EP 05252425**

(43) Date of publication of application:
**22.11.2006 Bulletin 2006/47**

(73) Proprietors:
• **UNILEVER PLC**
**London EC4P 4BQ (GB)**
Designated Contracting States:
**CY GB IE**
• **UNILEVER N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventors:
• **Berry, Mark John**
**Bedfordshire MK44 1LQ (GB)**
• **Quail, Patricia Jill**
**Bedfordshire MK44 1LQ (GB)**
• **Wilkinson, Joy Elizabeth**
**Bedfordshire MK44 1LQ (GB)**

(74) Representative: **Hugot, Alain et al**
**Unilever Patent Group**
**Colworth House**
**Sharnbrook**
**Bedford, MK44 1LQ (GB)**

(56) References cited:
US-A- 3 949 102          US-A- 4 988 529
US-B1- 6 558 729

• PATENT ABSTRACTS OF JAPAN vol. 2003, no. 12, 5 December 2003 (2003-12-05) -& JP 2003 250455 A (MEIJI MILK PROD CO LTD), 9 September 2003 (2003-09-09)

**Description**

Field of the Invention

The present invention relates to aerated edible emulsions such as whipped creams, toppings, mousses and ice creams. In particular the present invention relates to aerated edible emulsions fortified with calcium.

Background to the Invention

Calcium is required for healthy bones and teeth and therefore it is an important component of the diet. Milk is the natural vehicle for delivering calcium to the body and contains a number of components which aid calcium uptake. These components help the body to absorb and utilise the calcium - i.e. they improve calcium bio-availability.

Many people do not drink enough milk to obtain sufficient calcium. This can be due to a dislike of the taste, the inconvenience of needing to drink large volumes, or the image of milk being "old-fashioned", "sensible", or just plain boring.

Thus there have been attempts to provide foods and beverages fortified with calcium but with increased appeal and/or palatability. For example, drinks fortified with Calcium carbonate are known in the art but often the calcium in such products has poor bio-availability compared with that in milk. Calcium-fortified yoghurts are also widely available, but while the presence of milk proteins in such may improve bio-availability, many people do not like the acid taste of yoghurt.

US3949102 discloses a frozen dessert product with a calcium content of between 0.10 - 0.25%. The source of calcium is milk and milk solid.

US6558729 discloses a frozen ice cream dessert with a calcium content of between 0.08 and 0.25%. The source of calcium is milk and milk solid.

US4988529 discloses milk shakes with a calcium content of between 0.014 and 0.08%. The source of calcium is milk and milk solid.

JP2003250455 a frozen confection with no more than 0.12% calcium. The source of calcium is milk and milk solid.

Aerated edible emulsions, such as whipped creams, toppings, mousses and ice creams are popular foodstuffs which are often consumed for pleasure, i.e. as a snack, dessert or treat. Typically they are aerated to an overrun of 30 to 130%. High levels of saturated fats are conventionally considered essential to the creation of stable foams, and hence for an emulsion that can be aerated to the desired overrun, and which has good consumer properties such as texture and stability (see for example , "Ice Cream", 6th Edition, R.T. Marshall, H.D. Goff and R.W. Hartel, Kluwer Academic / Plenum Publishers, New York 2003, pages 36, 42-43 and 69 or "The Science of Ice Cream", C. Clarke, Royal Society of Chemistry, Cambridge, 2004, pages 46-48, 62-73 and 168). Thus, although previous attempts have been made to provide aerated edible emulsions fortified with calcium, such products have had limited success, as many health-conscious consumers prefer not to eat high levels of unhealthy saturated fat. One concern such consumers have is that eating saturated fats increases the low density lipoproteins (LDL) in their circulation. Increased LDL levels are believed to be associated with increased risk of coronary heart disease and stroke.

Consequently, even though calcium-fortified products are known, consumers are still not including sufficient calcium in their diet and conditions related to a deficiency of calcium are commonplace. For example, there are an estimated 10 million people with osteoporosis in the USA alone, with an estimated 34 million others at risk of developing the disease. This implies that existing calcium-fortified products are not palatable or healthy enough to be consumed on a regular basis.

Thus we have identified that there is a need to provide aerated edible emulsions with increased amounts of bio-available calcium but which are suitable for everyday consumption and retain the palatability of a conventional aerated edible emulsion.

We have found that it is possible to achieve such a goal by controlling the amount and type of fat in the aerated edible emulsion.

Tests and Definitions

**Overrun**

Overrun is defined by the following equation:

$$\text{overrun (\%)} = \frac{\text{density of premix - density of aerated edible emulsion}}{\text{density of aerated edible emulsion}} \times 100 \quad .$$

Wherein "premix" refers to the non-gaseous portion of the emulsion (e.g. the liquid emulsion prior to aeration or following de-aeration of the aerated emulsion). Overrun is measured at atmospheric pressure.

## Aerated edible emulsions, confections and frozen confections

As used herein, the term "edible emulsion" refers to a fabricated foodstuff comprising a dispersion of fat in an aqueous medium. The term "confection" refers to a sweet-tasting edible emulsion. A "frozen confection" is a confection intended for consumption in the frozen state (i.e. under conditions wherein the temperature of the confection is less than 0°C, and preferably under conditions wherein the confection comprises significant amounts of ice). The term "aerated" means that the edible emulsion has an overrun of at least 30%. Overrun is typically produced by intentionally incorporating gas into the product, such as by mechanical means (e.g. whipping). The gas can be any food-grade gas such as air, nitrogen, nitrous oxide or carbon dioxide.

Typical examples of aerated edible emulsions include:

- whipped spreads, whipped sauces, whipped dressings, whipped creams and whipped toppings;
- chilled aerated confections such as mousses, whipped yoghurts, milkshakes and sweetened whipped creams and toppings; and
- frozen aerated confections such as ice creams, sorbets, aerated water ices and aerated milk ices.

## Bio-available calcium

As used herein, the term "bio-available calcium" refers to that proportion of a calcium sample which is absorbed by the body during the 24 hour period following ingestion of the calcium sample. Suitable methods for measuring calcium absorption are given in B. Sandstrbm et al., "Methods for studying mineral and trace element absorption in humans using stable isotopes.", Nutrition Research Reviews, 1993, 6, pp 71-95. The preferred method is that of simultaneous oral and intravenous administration as summarised on pp 86-87 of Sandström *et al*.

## Fat

As used herein, the term "fat" refers to saturated, monounsaturated and polyunsaturated fatty acid. Fatty acids are usually present in the form of esters (e.g. mono- / di- / triglycerides).

## Sweetener

Sweetener means a sugar (i.e. mono and disaccharides), oligosaccharide containing from 3 to ten monosaccharide units joined in glycosidic linkage, glucose syrup with a dextrose equivalent (DE) of greater than 20, sugar alcohol, or a mixture thereof. Sweeteners include sucrose, fructose, lactose (for example from the source of milk protein), dextrose, invert sugar, corn syrup and sorbitol.

## Emulsifiers

Emulsifiers are described in "Ice Cream", 6th Edition, pages 85-86. The term "emulsifier" as used herein includes mono- and diglycerides of saturated or unsaturated fatty acids (e.g. monoglyceryl palmitate - MGP), polyoxyethylene derivatives of hexahydric alcohols (usually sorbitol), glycols, glycol esters, polyglycerol esters, sorbitan esters, stearoyl lactylate, acetic acid esters, lactic acid esters, citric acid esters, acetylated monoglyceride, diacetyl tartaric acid esters, polyoxyethylene sorbitan esters (such as polysorbate 80), sucrose esters, lecithin, egg yolk and mixtures of any these.

## Free sugars

As used herein, the term "free sugars" is defined as in "Diet, nutrition and the prevention of chronic diseases" - Report of a *Joint WHO/FAO* Expert *Consultation,* WHO Technical Report Series 916, WHO, Geneva, 2003. Thus free sugars are all mono and disaccharides added by the manufacturer, cook or consumer plus sugar naturally present and sourced from honey, syrups and juices. Free sugars do not include sugars naturally present and sourced from fruit or milk.

## Milk mineral composition

By "milk mineral composition" is meant a mixture of minerals substantially in the proportions found in bovine milk. Thus the milk mineral composition may be sourced from liquid milk, concentrated milk, milk powders, whey, whey powders and/or whey protein concentrates/isolates. Isolated milk mineral compositions may be prepared from filtration of milk and milk derivatives, e.g. by the process described in European patent application EP 1 031 288 A1. Such isolated compositions are available commercially. For example DMV International (Veghel, The Netherlands) supplies a milk mineral composition under the trade name Lactoval™, and ARLA Foods Ingredients (Skanderborgvej, Denmark) under the trade name CAPOLAC™.

**Low temperature extrusion**

Low temperature extrusion is a process which can be used for the manufacture of aerated frozen confections, and is described for example in US 5,345,781, WO 00/72697, and R.T. Marshall, et al, Ice Cream, 6th Edition, page 190. In low temperature extrusion, aerated, partially frozen confection leaves the freezer (scraped surface heat exchanger) and is passed through a screw extruder as it is cooled to typically -15°C. The extruder applies a higher shear stress (and lower shear rate) to the aerated frozen confection than a conventional freezer, which means that it can operate at low temperatures when the aerated frozen confection has very high viscosity. The extrusion apparatus may be either a single or twin screw.

**Hardening**

"Hardening" as used herein means cooling a partially frozen aerated confection until it is stiff enough to hold its own shape. It is a well-known term in the art and typical processes for hardening are described in "Ice Cream", 4th Edn, (W.S. Arbuckle, 1986, van Nostrand Renhold Co Inc, NY) at page 262.

Summary of the Invention

In a first aspect, the present invention provides an aerated edible emulsion having an overrun of at least 60%, comprising at least 0.3% calcium and at least 2% fat by weight of the aerated edible emulsion, the fat comprising less than 20% saturated fatty acids by weight of the fat.

The level of calcium is at least 0.3%, and levels of calcium of at least 0.4% or at least 0.5% are contemplated. Efficient usage of such high levels of fortification is ensured if at least 20% of the calcium (by weight of the calcium) is bio-available. More preferably at least 30% of the calcium is bio-available and even more preferably at least 40% of the calcium is bio-available.

The suitability of edible aerated emulsion for daily consumption may be altered by the level and kind of fat ingested with the calcium. In particular, replacing the saturated fats in the diet with unsaturated fats has been proposed as one way to reduce the amount of potentially harmful LDLs in the blood. Thus the aerated edible emulsion comprises minimum amounts of saturated fat, i.e. the fat comprises less than 20% saturated fatty acids, preferably less than 18%, more preferably less than 16% saturated fatty acids by weight of the fat. Suitable sources for the fat include vegetable oils with low levels of saturated fat such as sunflower oil, safflower oil, linseed oil, soybean oil, walnut oil, corn oil, grape seed oil, sesame oil, wheat germ oil, cottonseed oil, olive oil, rapeseed oil (canola oil), peanut oil and mixtures thereof. Preferably the fat comprises at least 80%, more preferably at least 90%, and even more preferably at least 95% by weight of the fat of the vegetable oil.

In order to maximise the suitability of edible aerated emulsion for daily consumption, it is preferable that the fat comprises at least 35% polyunsaturated fatty acids by weight of the fat, more preferably at least 40% and optimally at least 50%. Thus the preferred sources of the fat include vegetable oils with high levels of polyunsaturated fatty acids such as sunflower oil, safflower oil, linseed oil, soybean oil, walnut oil, corn oil, grape seed oil, sesame oil, wheat germ oil, cottonseed oil and mixtures thereof. Particularly preferred is sunflower oil owing to its clean flavour, high polyunsaturated fat content and wide availability.

Contrary to conventional wisdom, we have found that palatable and stable aerated edible emulsions can be prepared that contain significant amounts of unsaturated fat, i.e., at least 2% total fat by weight of the aerated edible emulsion, more preferably at least 4% and most preferably at least 6%. In fact levels of overrun can be achieved in excess of 60%, preferably at least 70%, more preferably at least 80%. It is preferable that the overrun does not exceed 200%, however, otherwise the aerated edible emulsion exhibits too "foamy" a mouth-feel. For confections, such high overruns also reduce the desired sweet taste and for frozen confections the desired cold mouth-feel is also reduced. More preferably the overrun is less than 150%, most preferably less than 130%.

To prevent the aerated edible emulsion from having too high an energy density (i.e. calorie content) it is preferable that the aerated edible emulsion comprises at most 15% fat by weight of the aerated edible emulsion, more preferably at most 12% and most preferably at most 10%.

The fat phase is especially important for foam stabilisation and whipping in emulsions that have a particularly dilute and/or low-viscosity aqueous phase. It has been found however, that the aerated edible emulsions of the present invention may comprise at least 40% water by weight of the aerated edible emulsion, preferably at least 50% and more preferably at least 55%, while retaining good foam stability. Such amounts of water are especially important for frozen aerated confections in order that the confection contains optimum amounts of ice in the frozen state.

As well as calcium, other minerals may also be included in the aerated edible emulsion. In a particularly preferred embodiment, at least part of the calcium (e.g. at least 20% by weight of the calcium, more preferably at least 50% and optimally at least 75%) is present as part of a milk mineral composition. The advantage of such compositions is that they provide (in addition to calcium) trace elements, phosphates that are also needed for bone health, and balanced amounts of other essential minerals such as magnesium.

Additional components may be included in the aerated edible emulsion to optimise bio-availability of the calcium. In particular chelating agents which increase the solubility and/or dispersibility of calcium may be included. Such chelating agents include casein phosphopeptides (CPPs) and hydrolysed polysaccharides or mixtures thereof. Suitable hydrolysed polysaccharides are described in European patent application EP 0 889 696 A. Casein phosphopeptides are the preferred chelating agents of this invention owing to their ability to increase the solubility of calcium. It is believed that, in order to be absorbed in the small intestine, the calcium must be soluble. CPPs are available commercially, for example from DMV International under the trade name CE90CPP™. Preferred amounts of chelating agent are at least 0.5 mg, more preferably at least 2 mg, most preferably at least 3 mg per mg of calcium.

Another agent which increases the absorption of calcium is vitamin D. Preferably the aerated edible emulsion comprises at least 3 $\mu$g of vitamin D and/or derivatives thereof per 100 g of the aerated edible emulsion, more preferably at least 5 $\mu$g and most preferably at least 7 $\mu$g. Preferably also, in order to avoid unwanted physiological effects, the amount of vitamin D and/or derivatives thereof is less than 65 $\mu$g per 100 g of the aerated edible emulsion. (Quantities of vitamin D are sometimes expressed in units of IU: 1 $\mu$g of vitamin $D_3$ is equivalent to 40 IU). Of the group of steroid molecules that are known as vitamin D, the preferred forms are vitamin $D_3$ (cholecalciferol) and/or derivatives thereof, vitamin $D_2$ (ergocalciferol) and/or derivatives thereof, and mixtures thereof. Particularly preferred is vitamin $D_3$ as it is the natural form of vitamin D.

In order to aid in emulsification and aeration during manufacture of the aerated edible emulsion it is preferable that the aerated edible emulsion comprises protein in an amount of at least 1% by weight of the aerated edible emulsion, more preferably greater than 2%. In order to prevent the aerated edible emulsion from exhibiting a chalky mouth-feel, however, it is also preferable that the protein content is less than 8%, more preferably less than 6% by weight of the aerated edible emulsion. Suitable proteins for use in the present invention include animal proteins such as milk proteins, egg proteins and gelatin as well as vegetable proteins such as soya proteins. Particularly preferred are milk proteins owing to their superior flavour, heat stability and surface activity. Suitable sources of milk protein include milk, concentrated milk, milk powders, whey, whey powders and whey protein concentrates/isolates. Most preferred are caseins owing to their ability to bind calcium and because they are digested to CPPs by proteases in the gut. Suitable additional sources of casein include caseinates such as sodium and/or calcium caseinates. Sources of milk protein generally also comprise other materials. For example, skimmed milk powder typically comprises lactose, milk protein and milk minerals.

The aerated edible emulsions of the present invention may contain one or more sweeteners.

A preferred sweetener is lactose, because lactose aids calcium absorption and has a low relative sweetness. Lactose is particularly preferred when added as part of the milk solids because it is then not counted among the unhealthy free sugars. Thus it is preferable that lactose is present in an amount of at least 2% by weight of the aerated edible emulsion, preferably at least 3%, more preferably at least 4%. In order to avoid crystallisation of the lactose, however, it is also preferred that the lactose is present in an amount of less than 9%, preferably less than 8% by weight of the aerated edible emulsion.

In order to provide the customary sweetness associated with confections and, in the case of frozen confections, to avoid the confection being unduly hard, it is preferable that aerated confections comprise sweeteners in an amount of at least 10% by weight of the confection, more preferably at least 15%, most preferably at least 17%. To avoid the confection being too sweet, the amount of sweeteners should be at most 35%, preferably at most 30%, more preferably at most 25% by weight of the confection.

In order to increase the appeal of the aerated edible emulsion as an everyday food, it is preferable that the amount of free sugars is less than 17% by weight of the aerated edible emulsion, preferably less than 16%, more preferably less than 15%.

The aerated edible emulsions may also comprise a stabiliser. Suitable stabilisers include one or more of alginates, gum arabic, gum ghatti, gum karaya, gum tragacanth, locust bean gum, carrageenans, xanthan gum, guar gum, gelatine, agar, sodium carboxymethylcellulose, microcrystalline cellulose, methyl and methylethyl celluloses, hydroxypropyl and hydroxypropylmethyl celluloses, low and high methoxyl pectins, starches, maltodextrins, modified starches, and mixtures thereof. Preferably the aerated edible emulsions contain no more than 0.5% by weight alginate, carrageenan, guar, locust bean gum or pectin or mixtures thereof, more preferably no more than 0.3%, since these stabilisers are believed to interact with calcium, and may thereby reduce its bioavailability.

The aerated edible emulsions may also comprise an emulsifier. However, we have found that the edible emulsions can be aerated even in the absence of emulsifiers and, in general, the air phase is actually more stable in the absence of emulsifiers. Thus in a preferred embodiment the edible emulsion is substantially free from emulsifier. In particular, the aerated edible emulsion may comprise less than 0.04%, more preferably less than 0.02%, even more preferably less than 0.01% total emulsifier by weight of the aerated edible emulsion.

Preferably the aerated edible emulsion is an aerated confection, more preferably a frozen aerated confection.

The aerated edible emulsions may be manufactured by any suitable process. However, it is preferred that the aerated edible emulsion is manufactured by a process comprising the steps of:

   (a) preparing a premix comprising fat and water;
   (b) homogenising the premix;
   (c) pasteurising and/or sterilising the premix; and
   (d) aerating the premix.

Preferably the process steps are carried out in the order (a); then (b); then (c) and then (d). However, any convenient order may be used and, in particular, step (d) may be performed before step (b) and/or step (c).

In the case of frozen aerated confections, the process comprises the following additional steps:

   (e) freezing the premix to form a partially frozen aerated confection; and then
   (f) extruding the partially frozen aerated confection with low temperature extrusion, and/or hardening the partially frozen aerated confection, to produce the aerated frozen confection.

Preferably steps (d) and (e) are performed simultaneously, e.g. with an ice cream freezer. Preferably the partially frozen aerated confection is drawn from the ice cream freezer at a temperature of below -6.5°C, more preferably below -7.0°C or - 7.5°C, most preferably below -8.0°C. It has been found that the lower the temperature at which the partially frozen aerated confection is drawn from the freezer, the slower the meltdown of the hardened frozen aerated confection.

The low temperature extrusion in step (f) will typically be such that the frozen aerated confection leaves the low temperature extruder at a temperature of below -9°C, preferably at a temperature in the range -12 to 17°C.

Typically the aerated frozen confection will be hardened at a temperature in the range -17 to -40°C, preferably -20 to -35°C.

Detailed Description of the Invention

The invention will now be further described by reference to the following non-limiting examples.

**Example 1**

This example demonstrates the formulation and manufacture of three frozen aerated confections (IC1 to IC3) according to the invention, along with a comparative frozen aerated confection (IC0) which was not fortified with calcium.

*Materials*

The frozen aerated confections were formulated using the following materials:

-   Skimmed milk powder (SMP) was supplied by Adams Food Ingredients Ltd (Leek, UK) and contained 53% (w/w) lactose, 36% (w/w) protein, 0.6% (w/w) milk fat and 8% milk minerals with the remainder being moisture.
-   Whey powder was WPC Conc 30% A230 supplied by Glanbia (Harefield, UK) and contained 55% (w/w) lactose, 31% (w/w) protein, 2% milk fat and 8% milk minerals with the remainder being moisture.
-   Fructose, sucrose and dextrose monohydrate were pure and crystalline and supplied by Tate and Lyle (London, UK).
-   Guar gum was supplied by Willy Benecke (Hamburg, Germany) and had a moisture content of 14%.
-   Carrageenan was Genulacta™ L100 supplied by CP Kelco (Lille Svensved, Denmark) and had a moisture content of 11%.
-   Locust Bean Gum (LBG) was Viscogum FA supplied by Degussa Texturant Systems (France) and had a moisture content of less than 10%.
-   Low Fructose Corn Syrup was C*Sweet F017Y4, had a moisture level of 22%, a DE of 63 and was supplied by Cerester, Manchester, UK.
-   Sunflower oil was supplied by Leon Frenkel Ltd (Belvedere, UK) and had a saturated fatty acid content of around 9% and a polunsaturated fat content of around 66%.
-   Oligofructose was Raftilose™ P95 supplied by ORAFTI (Tienen, Belgium) and had a moisture content of 3% (w/w).

On a dry basis the Raftilose™ consisted of 95% (w/w) oligofructose and 5% (w/w) sugars (consisting of 3% sucrose, 1% fructose and 1% glucose).

- Milk mineral composition was CAPOLAC™ MM-0525 BBG supplied by ARLA Foods Ingredients (Skanderborgvej, Denmark) and had a calcium content of 24% by weight of the milk mineral composition.
- Vitamin D preparation was Dry Vitamin D3 100 CWS/AM supplied by DSM Nutritional Products Europe (Basel, Switzerland) and contained 90,000-110,000 IU of vitamin $D_3$ per g of the preparation.

*Formulations*

The formulations are given in Table 1.

TABLE 1

| Ingredient | Formulation | | | |
|---|---|---|---|---|
| | IC0 | IC1 | IC2 | IC3 |
| SMP (% w/w) | 5.00 | 5.00 | 5.00 | 5.00 |
| Whey Powder (% w/w) | 5.00 | 5.00 | 5.00 | 5.00 |
| Sucrose (% w/w) | 5.00 | 5.00 | 5.00 | 11.00 |
| Dextrose monohydrate (% w/w) | 5.80 | 5.80 | 5.80 | - |
| Fructose (% w/w) | 4.40 | 4.40 | 4.40 | - |
| Low fructose corn syrup (% w/w) | - | - | - | 10.50 |
| Oligofructose (% w/w) | 4.00 | 4.00 | 4.00 | - |
| LBG (% w/w) | 0.25 | 0.25 | 0.25 | 0.25 |
| Guar gum (% w/w) | 0.11 | 0.11 | 0.11 | 0.11 |
| Carrageenan (% w/w) | 0.04 | 0.04 | 0.04 | 0.04 |
| Sunflower oil (% w/w) | 8.00 | 8.00 | 8.00 | 8.00 |
| Milk mineral composition (% w/w) | - | 1.70 | 2.30 | 1.70 |
| Vitamin D preparation (% w/w) | - | - | - | 0.005 |
| Vanilla flavour (% w/w) | 0.18 | 0.18 | 0.18 | 0.18 |
| Water (% w/w) | 62.22 | 60.52 | 59.92 | 58.215 |

*Process*

All ingredients were combined in an agitated heated mix tank. Once all of the ingredients were blended together, the mix was subjected to high shear mixing at a temperature of 65°C for 2 minutes.

The premix was then passed through an homogeniser at 150 bar and 70°C and then subjected to pasteurisation at 82°C for 25 s before being rapidly cooled to 4°C by passing through a plate heat exchanger. The premix was then aged at 4°C for 12 hours (IC0 to IC2) or 3 hours (IC3) in an agitated tank prior to freezing.

Each formulation was frozen using a typical ice cream freezer (scraped surface heat exchanger, MF75 supplied by Technohoy) operating with an open dasher (C29800), an extrusion temperature of about -7°C and a target overrun (at atmospheric pressure) of 100%. All of the formulations were found to aerate without difficulty. The overrun achieved (as determined using an overrun cup as described in "The Science of Ice Cream" on page 77) for each formulation is given in table 2:

TABLE 2

| Formulation | Overrun achieved at extrusion (%) |
|---|---|
| IC0 | 104 ± 1 |
| IC1 | 105 ± 3 |
| IC2 | 101 ± 1 |

(continued)

| Formulation | Overrun achieved at extrusion (%) |
|---|---|
| IC3 | 101 ± 2 |

Formulations IC0 to IC2 were also tasted directly on extrusion. Both IC1 and IC2 were found to be creamier, thicker and firmer than the formulation that was not fortified with calcium (IC0).

Directly from the freezer, the partially frozen aerated confections were filled into 100 ml pots. The pots were then hardened by blast freezing for 3 hours at -35°C before being transferred to a -25°C store for storage.

**Example 2**

This example demonstrates the formulation and manufacture of a chilled aerated confection according to the invention.

*Materials*

The confection was formulated using the same materials as in Example 1.

*Formulation*

The formulation is given in Table 3.

TABLE 3

| Ingredient | Amount (% w/w) |
|---|---|
| SMP | 5.000 |
| Whey Powder | 5.000 |
| Sucrose | 11.000 |
| Low fructose corn syrup | 10.500 |
| LBG | 0.250 |
| Guar gum | 0.110 |
| Carrageenan | 0.035 |
| Sunflower oil | 8.000 |
| Milk mineral composition | 1.700 |
| Vitamin D preparation | 0.005 |
| Vanilla flavour | 0.185 |
| Water | 58.215 |

*Process*

All ingredients were combined in an agitated heated mix tank. Once all of the ingredients were blended together, the mix was subjected to high shear mixing at a temperature of 65°C for 2 minutes.

The premix was then passed through an homogeniser at 150 bar and 70°C and then subjected to pasteurisation at 85°C for 25 s before being rapidly cooled to 4°C by passing through a plate heat exchanger. The premix was then aged at 4°C for 12 hours in an agitated tank, followed by 24 hours in a non-agitated churn, prior to aeration.

Aeration was carried out by whipping the premix with a Hobart mixer (Hobart corp. model N50 CE) using -2 kg of mix and with the mixer set on medium speed. The premix had an initial temperature of around 5°C and was whipped in an un-chilled bowl at an ambient air temperature of 20°C. The overrun was monitored by making a single measurement every 30 seconds using the overrun cup method until an overrun of 60% was reached. The results are set out in table 4:

TABLE 4

| Whipping Time (min) | Overrun (%) |
|---|---|
| 2.5 | 16 |
| 5.0 | 24 |
| 7.5 | 39 |
| 10.0 | 49 |
| 12.5 | 59 |
| 15.0 | 63 |

**Claims**

1. An aerated edible emulsion having an overrun of at least 60%, comprising at least 0.3% calcium and at least 2% fat by weight of the aerated edible emulsion; **characterised in that** the fat comprises less than 20% saturated fatty acids by weight of the fat.

2. An aerated edible emulsion according to claim 1 wherein the fat comprises at least 35% polyunsaturated fatty acids by weight of the fat.

3. An aerated edible emulsion according to claim 1 or claim 2 wherein the fat comprises at least 80% by weight of the fat of a vegetable oil selected from the group consisting of olive oil, sunflower oil, safflower oil, rapeseed oil, corn oil, peanut oil, linseed oil, soybean oil, walnut oil, grapeseed oil, sesame oil, wheat germ oil, cottonseed oil and mixtures thereof.

4. An aerated edible emulsion according to any preceding claim wherein at least 20% of the calcium by weight of the calcium is bio-available.

5. An aerated edible emulsion according to any preceding claim wherein at least 20% by weight of the calcium is present as part of a milk mineral composition.

6. An aerated edible emulsion according to any preceding claim wherein the aerated edible emulsion additionally comprises a calcium chelating agent selected from casein phosphopeptides, hydrolysed polysaccharide or mixtures thereof.

7. An aerated edible emulsion according to any preceding claim wherein the aerated edible emulsion is fortified with vitamin D.

8. An aerated edible emulsion according to any preceding claim wherein the aerated edible emulsion is an aerated confection.

9. An aerated edible emulsion according to claim 8 wherein the aerated edible emulsion is a frozen aerated confection.

10. An aerated edible emulsion according to any preceding claim wherein the aerated edible emulsion additionally comprises free sugars in an amount of less than 17% by weight of the aerated edible emulsion.

**Patentansprüche**

1. Belüftete essbare Emulsion mit einem Überlauf von mindestens 60%, umfassend mindestens 0,3% Calcium und mindestens 2% Fett nach Gewicht der belüfteten essbaren Emulsion; **dadurch gekennzeichnet, dass** das Fett weniger als 20% gesättigte Fettsäuren nach Gewicht des Fetts umfasst.

2. Belüftete essbare Emulsion gemäß Anspruch 1, worin das Fett mindestens 35% mehrfach ungesättigte Fettsäuren nach Gewicht des Fetts umfasst.

**3.** Belüftete essbare Emulsion gemäß Anspruch 1 oder Anspruch 2, worin das Fett mindestens 80% nach Gewicht des Fetts von einem Pflanzenöl umfasst, ausgewählt aus der Gruppe bestehend aus Olivenöl, Sonnenblumenöl, Safloröl, Rapsöl, Maisöl, Erdnussöl, Leinsamenöl, Sojaöl, Walnussöl, Traubenkernöl, Sesamöl, Weizenkeimöl, Baumwollsaatöl und Gemischen davon.

**4.** Belüftete essbare Emulsion gemäß einem vorhergehenden Anspruch, worin mindestens 20% des Calciums nach Gewicht des Calciums bioverfügbar sind.

**5.** Belüftete essbare Emulsion gemäß einem vorhergehenden Anspruch, worin mindestens 20 Gew.-% des Calciums als Teil einer Milchmineralzusammensetzung vorhanden sind.

**6.** Belüftete essbare Emulsion gemäß einem vorhergehenden Anspruch, wobei die belüftete essbare Emulsion zusätzlich einen Calcium-Chelatbildner umfasst, ausgewählt aus Caseinphosphopeptid, hydrolysiertem Polysaccharid oder Gemischen davon.

**7.** Belüftete essbare Emulsion gemäß einem vorhergehenden Anspruch, wobei die belüftete essbare Emulsion mit Vitamin D verstärkt ist.

**8.** Belüftete essbare Emulsion gemäß einem vorhergehenden Anspruch, wobei die belüftete essbare Emulsion ein belüftetes Konfekt ist.

**9.** Belüftete essbare Emulsion gemäß Anspruch 8, wobei die belüftete essbare Emulsion ein gefrorenes belüftetes Konfekt ist.

**10.** Belüftete essbare Emulsion gemäß einem vorhergehenden Anspruch, wobei die belüftete essbare Emulsion zusätzlich freie Zucker in einer Menge von weniger als 17% nach Gewicht der belüfteten essbaren Emulsion umfasst.

**Revendications**

**1.** Émulsion comestible aérée, ayant une expansion d' au moins 60 %, comprenant au moins 0,3% de calcium et au moins 2 % de graisse en poids de l'émulsion comestible aérée, **caractérisée en ce que** la graisse comprend moins de 20 % d'acides gras saturés en poids de graisse.

**2.** Émulsion comestible aérée selon la revendication 1, où la graisse comprend au moins 35 % d'acides gras polyinsaturés en poids de graisse.

**3.** Émulsion comestible aérée selon la revendication 1 ou la revendication 2, où la graisse comprend au moins 80 % en poids de graisse d'une huile végétale choisie dans le groupe constituée par l'huile d'olive, l'huile de tournesol, l'huile de carthame, l'huile de colza, l'huile de maïs, l'huile de cacahuète, l'huile de graines de lin, l'huile de soja, l'huile de noix, l'huile de pépins de raisin, l'huile de sésame, l'huile de germe de blé, l'huile de graines de coton et leurs mélanges.

**4.** Émulsion comestible aérée selon l'une quelconque des revendications précédentes, où au moins 20 % du calcium en poids de calcium sont biodisponibles.

**5.** Émulsion comestible aérée selon l'une quelconque des revendications précédentes, où au moins 20 % en poids du calcium sont présents sous forme de partie d'une composition minérale lactée.

**6.** Émulsion comestible aérée selon l'une quelconque des revendications précédentes, où l'émulsion comestible aérée comprend en plus un agent chélateur du calcium choisi parmi le phosphopeptide de caséine, le polysaccharide hydrolysé ou leurs mélanges.

**7.** Émulsion comestible aérée selon l'une quelconque des revendications précédentes, où l'émulsion comestible aérée est enrichie en vitamine D.

**8.** Émulsion comestible aérée selon l'une quelconque des revendications précédentes, où l'émulsion comestible aérée est une confiserie aérée.

9. Émulsion comestible aérée selon la revendication 8, où l'émulsion comestible aérée est une confiserie aérée congelée.

10. Émulsion comestible aérée selon l'une quelconque des revendications précédentes, où l'émulsion comestible aérée comprend en plus des sucres libres en une quantité inférieure à 17 % en poids de l'émulsion comestible aérée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3949102 A
- US 6558729 B
- US 4988529 A
- JP 2003250455 A
- EP 1031288 A1
- US 5345781 A
- WO 0072697 A
- EP 0889696 A

**Non-patent literature cited in the description**

- Ice Cream. **R.T. MARSHALL ; H.D. GOFF ; R.W. HARTEL.** Ice Cream. Kluwer Academic / Plenum Publishers, 2003, vol. 36, 42-43
- The Science of Ice Cream. **C. CLARKE.** The Science of Ice Cream. Royal Society of Chemistry, 2004, 46-4862-73168
- **B. SANDSTRBM et al.** Methods for studying mineral and trace element absorption in humans using stable isotopes. *Nutrition Research Reviews,* 1993, vol. 6, 71-95
- Ice Cream. 85-86
- **R.T. MARSHALL et al.** Ice Cream. 190
- Ice Cream. van Nostrand Renhold Co Inc, 1986, 262
- The Science of Ice Cream. 77